# FASCICULE DE BREVET EUROPEEN

(11) **EP 0 568 435 B1**
(45) Date de publication et mention de la délivrance du brevet: **27.12.1995**
(21) Numéro de dépôt: 93401076.0
(22) Date de dépôt: 26.04.1993
(51) Int. Cl.: B60J 10/04

(54) **Joint d'étanchéité destiné notamment à former une coulisse pour glace mobile de véhicule automobile**
Dichtung, insbesondere zur Bildung einer Gleitführungsschiene für ein bewegliches Kraftfahrzeugsfenster
Sealing, especially intended to form a guide rail for a movable motor vehicle window pane

(30) Priorité: 27.04.1992 FR 9205157
(43) Date de publication de la demande: 03.11.1993
(73) Titulaire: HUTCHINSON, F-75008 Paris (FR)
(72) Inventeur: Tessier, Bernard, F-45120 Chalette s/Loing (FR)
(74) Mandataire: Doireau, Marc

(56) Documents cités:
- EP-A- 0 175 386
- EP-A- 0 403 854
- EP-A- 0 412 782

## Description

L'Invention concerne un joint d'étanchéité, destiné notamment à former une coulisse pour glace mobile de véhicule automobile, comprenant un talon et deux ailes latérales ou jambes respectivement reliées au talon par deux zones de raccordement formant chacune une charnière, et au moins une lèvre destinée à venir en contact avec la glace mobile, ledit joint, une fois logé dans une feuillure de l'encadrement de la baie d'une porte du véhicule automobile, présentant globalement une section droite en forme de U avec les deux jambes disposées sensiblement parallèlement et en vis-à-vis l'une de l'autre.

On connaît déjà, dans de nombreuses réalisations, des joints d'étanchéité montés fixes sur l'encadrement de la baie d'une porte de véhicule qu'ils équipent, ces joints étant destinés à procurer l'étanchéité requise à l'eau, d'une part, et de contribuer à l'isolation phonique, d'autre part.

Ces joints sont désignés sous le nom de "coulisses" lorsqu'ils forment l'encadrement supérieur et latéral de la baie propre à être ouverte ou fermée par la glace, tandis qu'ils sont désignés sous le nom de "lécheurs", lorsqu'ils sont prévus sur le bord inférieur de la baie.

Les coulisses et les lécheurs sont équipés d'au moins une lèvre d'étanchéité, en caoutchouc naturel ou synthétique, cette lèvre s'appliquant en se déformant contre la glace mobile avec laquelle elle est propre à coopérer. Etant donné que l'application d'une telle lèvre contre la glace a tendance à freiner le coulissement de celle-ci, la surface de la lèvre en contact avec la glace est avantageusement recouverte d'un matériau possédant de bonnes propriétés de glissement.

D'une manière générale, par suite de conditions défavorables au coulissement de la glace susceptibles de se traduire par une résistance de frottement importante, le mouvement coulissant de la glace, à partir de sa position fermée, peut engendrer des forces de traction tendant à extraire le joint de son logement.

Pour éviter ou limiter une extraction intempestive du joint hors de son logement, une coulisse est généralement équipée de moyens de verrouillage tels que des saillies par exemple, qui viennent se positionner dans des logements formés par des replis de la feuillure pour immobiliser le joint. Cependant, dans certains cas, du fait de la conception du véhicule, la feuillure ne présente pas de tels replis susceptibles d'assurer l'immobilisation du joint.

D'après le document antérieur EP-A-0 175 386, il est connu de prévoir dans ce type de joint d'étanchéité un talon de renfort, dont la base est solidaire de la jambe externe du joint, par rapport à l'habitacle du véhicule, et dont l'autre extrémité est destinée à venir au voisinage immédiat du talon reliant les deux jambes, pour éviter à la jambe externe du joint de pouvoir fléchir vers l'intérieur. Dans ces conditions, le talon de renfort selon ce document antérieur n'apporte pas une solution au problème posé par des forces de traction appliquées sur la jambe externe du joint et qui tendent à extraire le joint de son logement.

L'invention a pour but de résoudre ce problème et elle propose a cet effet un joint d'étanchéité destiné notamment à former une coulisse pour glace mobile de véhicule automobile, comprenant un talon et deux ailes latérales ou jambes respectivement interne et externe par rapport à l'habitacle du véhicule et reliées au talon du joint par deux zones de raccordement formant chacune une charnière, au moins une lèvre destinée à venir en contact avec la glace mobile, et au moins un talon interne de renfort, ledit joint, une fois logé dans une feuillure de l'encadrement de la baie d'une porte du véhicule automobile, présentant globalement une section droite en forme de U, avec ses deux ailes disposées sensiblement parallèlement et en vis-à-vis l'une de l'autre (Joint du type divulgué par EP-A-0 175 386), caractérisé en ce que la base du talon de renfort est solidaire de la jambe interne du joint et son extrémité libre vient au voisinage immédiat du talon du joint pour bloquer la charnière entre la jambe interne et le talon du joint de manière à maintenir en place le joint lorsque la jambe extérieure est soumise à une force de traction.

Selon un mode de réalisation préférentiel de l'Invention, l'extrémité libre du talon de renfort vient au contact du talon du joint.

Selon un avantage important de l'Invention, la zone d'affleurement de la jambe externe du joint avec l'encadrement extérieur de porte ne se détériore pas, ce qui sauvegarde l'esthétique de la porte du véhicule.

Selon un autre avantage de l'Invention, le maintien de la zone d'affleurement entre le joint et l'encadrement extérieur de porte ne facilite pas l'intrusion d'un outil par une personne qui tenterait d'accéder par l'extérieur au système de verrouillage des portes.

D'autres avantages, caractéristiques et détails de l'Invention ressortiront de la description explicative qui va suivre faite en référence aux dessins annexés donnés uniquement à titre d'exemple et dans lesquels :
- la figure 1 est une vue en perspective partielle d'une partie de carrosserie d'automobile pour situer l'Invention au niveau de la baie d'une porte,
- et la figure 2 est une vue en coupe transversale d'un mode de réalisation du joint selon l'Invention.

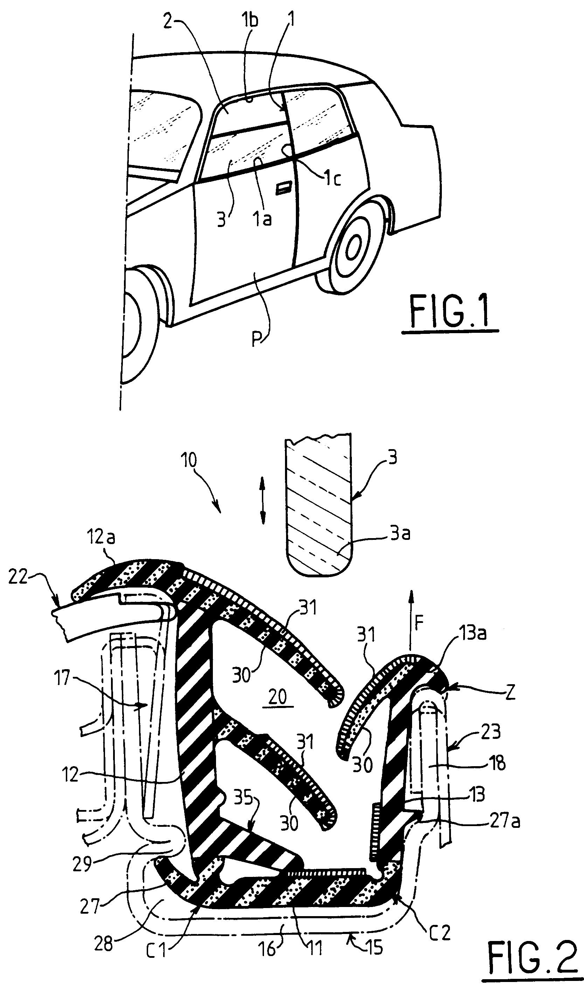

Un joint d'étanchéité désigné dans son ensemble par la référence 1 est prévu sur l'encadrement de la baie 2 d'une porte P de véhicule automobile. La baie 2 est propre à être ouverte ou fermée par une glace coulissante 3, comme cela est schématiquement illustré à la figure 1. Un tel joint 1 se décompose généralement en un lécheur 1a qui est fixé sur l'encadrement inférieur de la baie 2, et en coulisses 1b et 1c qui sont respectivement fixées sur les encadrements supérieur et latéral de la baie 2.

Le joint d'étanchéité 10 selon l'Invention et tel que représenté à la figure 2, est plus particulièrement destiné à former la coulisse 1b et/ou 1c du joint de la figure 1.

Le joint 10 comporte un talon 11 et deux ailes ou jambes latérales 12 et 13 réunies au talon 11 par deux zones de raccordement C1 et C2, formant chacune une charnière, qui permettent au joint 10 de se déformer lors de son montage dans l'encadrement associé de la porte P du véhicule.

Dans l'exemple considéré ici, l'encadrement est constitué par une feuillure 15 à section droite globalement en forme de U, avec une âme 16 et deux ailes parallèles en vis-à-vis 17 et 18. Lorsque le joint 10 est engagé dans la feuillure 15:
- son talon 11 vient globalement en appui contre l'âme 16 de la feuillure 15,
- et ses deux jambes 12 et 13, après pivotement autour des zones de raccordement C1 et C2, viennent globalement en appui contre les ailes 17 et 18 de la feuillure 15, respectivement.

Ainsi, les deux jambes 12 et 13 se retrouvent globalement parallèles et en vis-à-vis l'une de l'autre, en délimitant entre elles une rainure 20 dans laquelle est destinée à s'engager la partie d'extrémité 3a associée de la glace 3.

Dans ce qui suit, les jambes du joint 10 seront respectivement dénommées interne 12 et externe 13, et les deux ailes de la feuillure 15 seront respectivement dénommées interne 17 et externe 18, par rapport à l'habitacle du véhicule.

La jambe interne 12 du joint 10, vers son extrémité opposée au talon 11, comporte un rebord externe 12a qui vient en appui sur une partie 22 de l'encadrement intérieur de la porte du véhicule. La jambe 13, vers son extrémité opposée au talon 11, comporte un rebord interne 13a qui vient en appui sur une partie 23 de l'encadrement extérieur de la porte du véhicule, en délimitant une zone d'affleurement rectiligne Z avec celle-ci.

Pour assurer la fixation du joint 10 à l'intérieur de la feuillure 15, il est prévu des moyens de verrouillage qui sont fonction du profil interne de la feuillure 15.

Dans l'exemple considéré ici, ces moyens comprennent une saillie latérale externe 27 située à la base de la jambe interne 12, et destinée à s'engager dans un logement 28 délimité entre l'âme 16 et un repli 29 de l'aile interne 17 de la feuillure 15. Par contre, au niveau de la jambe externe 13 du joint 10, seule au moins une petite nervure ou saillie latérale externe 27a fait saillie sur la jambe externe 13, le profil sensiblement rectiligne de l'aile externe 18 de la feuillure 15 ne permettant pas de définir un quelconque logement apte à recevoir un élément de verrouillage.

Le joint 10 est complété, d'une façon connue en soi, par plusieurs lèvres 30 destinées à venir au contact de la glace 3. Avantageusement, les surfaces en contact des lèvres 30 avec la glace 3 sont recouvertes d'un matériau 31 présentant de bonnes qualités de glissement.

Dans ces conditions, si un effort de traction est exercé suivant la flèche F sur sa jambe externe 13, le joint 10 est susceptible de pivoter autour de la zone de raccordement C1 formant charnière entre le talon 11 et la jambe interne 12 du joint 10.

Cet effort de traction peut résulter par exemple d'une résistance au coulissement anormalement élevée de la glace 3 à partir de sa position fermée, et il peut entraîner une extraction partielle du joint 10 hors de la feuillure 15. La zone de raccordement Z du joint 10 avec l'encadrement extérieur de la porte du véhicule, n'est alors plus une zone d'affleurement. L'esthétique de la porte est alors détériorée, et cela est également nuisible à une bonne étanchéité.

Aussi, selon l'Invention, il est prévu un talon de renfort interne 35 pour éviter le pivotement du joint autour de la charnière C1.

Dans l'exemple considéré ici, ce talon de renfort 35 est solidaire à sa base, de la jambe interne 12 du joint 10, alors que son extrémité libre vient au voisinage immédiat, ou avantageusement au contact, du talon 11 du joint 10.

Les jambes 12 et 13 du joint 10 et le talon de renfort 35 sont avantageusement extrudés en un matériau élastomère de plus grande dureté que celui qui est coextrudé avec eux pour former le talon 11 du joint 10.

D'une manière générale, il existe une distance suffisante entre l'extrémité du talon de renfort 35 et la zone de raccordement C2 de la jambe externe 13 du joint 10 pour permettre à la vitre 3 de venir au contact ou au voisinage du talon 11.

Bien entendu, l'Invention n'est nullement limitée au mode de réalisation décrit précédemment. En particulier, on pourrait prévoir un talon de renfort au niveau de chaque zone de raccordement des jambes du joint 10, si nécessaire.

## Revendications

1. Joint d'étanchéité destiné notamment à former une coulisse pour glace mobile de véhicule automobile, comprenant un talon (11) et deux ailes latérales ou jambes respectivement interne (12) et externe (13) par rapport à l'habitacle du véhicule et reliées au talon (11) du joint (10) par deux zones de raccordement (C1, C2) formant chacune une charnière, au moins une lèvre (30) destinée à venir en contact avec la glace mobile (3), et au moins un talon interne de renfort (35), ledit joint, une fois logé dans une feuillure (15) de l'encadrement de la baie d'une porte du véhicule automobile, présentant globalement une section droite en forme de U, avec ses deux ailes (12, 13) disposées sensiblement parallèlement et en vis-à-vis l'une de l'autre, caractérisé en ce que la base du talon de renfort (35) est solidaire de la jambe interne (12) du joint (10) et son extrémité libre vient au voisinage immédiat du talon (11) du joint (10) pour bloquer la charnière (C1) entre la jambe interne (12) et le talon (11) du joint (10) de manière à maintenir en place le joint (10) lorsque la jambe externe (13) est soumise à une force de traction (F).

2. Joint d'étanchéité selon la revendication 1, caractérisé en ce que l'extrémité libre du talon de renfort (35) vient en contact avec le talon (11) du joint.

3. Joint d'étanchéité selon la revendication 1 ou 2, caractérisé en ce que les jambes (12, 13) et le talon de renfort (35) sont extrudés en un matériau élastomère de plus grande dureté que celui qui est coextrudé avec eux pour former le talon (11) du joint.

## Claims

1. A seal intended particularly to form a slideway for the movable window of a motor vehicle, comprising a heel member (11) and two lateral legs respectively inner (12) and outer (13) in relation to the body of the vehicle and connected to the heel member (11) of the seal (10) by two connecting zones (C1, C2) each forming a hinge, at least one lip (30) intended to contact the movable window (3), and at least one reinforcing heel member (35), the said seal, once seated in a rebate (15) in the frame of the structural aperture in a motor vehicle door, generally having a U-shaped cross-section, with its two wings (12, 13) disposed substantially parallel and facing each other, characterized in that the base of the reinforcing heel member (35) is rigid with the inner leg (12) of the seal (10) and of which the free end is in the immediate vicinity of the heel member (11) of the seal (10) in order to lock in place said seal (10) where a traction force is exerted in the external leg (13).

2. A seal according to claim 1, characterized in that the free end of the reinforcing heel member (35) comes in contact with the heel member (11) of the seal.

3. A seal according to claim 1 or 2, characterized in that the legs (12, 13) and the reinforcing heel member (35) are extruded from an elastomeric material of greater hardness than that which is coextruded with them in order to form the heel member (11) of the seal.

## Patentansprüche

1. Dichtung, die insbesondere dazu bestimmt ist, eine Gleitführung für eine bewegliche Fensterscheibe eines Kraftfahrzeugs zu bilden, umfassend einen Steg (11) und zwei seitliche Flügel oder Schenkel, jeweils innen (12) und außen (13) mit Bezug auf die Fahrzeugkabine und verbunden mit dem Steg (11) der Dichtung (10) durch zwei Verbindungszonen (C1, C2), von denen jede ein Scharnier bildet, wenigstens eine Lippe (30), die dazu bestimmt ist, in Kontakt mit der beweglichen Fensterscheibe (3) zu kommen, und wenigstens einen inneren Verstärkungsteg (35), wobei die genannte Dichtung, wenn sie einmal in eine Fuge (15) der Umrahmung der Öffnung einer Tür des Kraftfahrzeugs eingesetzt ist, insgesamt einen U-förmigen Querschnitt aufweist, wobei ihre beiden Flügel (12, 13) im wesentlichen parallel und einander gegenüberliegend angeordnet sind, dadurch **gekennzeichnet**, daß die Basis des Verstärkungsstegs (35) mit dem inneren Schenkel (12) der Dichtung (10) zusammenhängt bzw. einstückig ist und sein freies Ende in unmittelbare Nachbarschaft des Stegs (11) der Dichtung (10) kommt, um das Scharnier (C1) zwischen dem inneren Schenkel (12) und dem Steg (11) der Dichtung (10) in der Weise zu blockieren, daß die Dichtung (10) an Ort und Stelle gehalten wird, wenn der äußere Schenkel (13) einer Zug- bzw. Vortriebskraft (F) unterworfen wird.

2. Dichtung nach Anspruch 1, dadurch **gekennzeichnet**, daß das freie Ende des Verstärkungsstegs (35) in Kontakt mit dem Steg (11) der Dichtung kommt.

3. Dichtung nach Anspruch 1 oder 2, dadurch **gekennzeichnet**, daß die Schenkel (12, 13) und der Verstärkungssteg (35) aus einem Elastomermaterial von größerer Härte extrudiert sind, als jenes, das mit ihnen zur Bildung des Stegs (11) der Dichtung koextrudiert ist.
